# EUROPÄISCHE PATENTSCHRIFT

(11) **EP 3 976 427 B1**
(45) Veröffentlichungstag und Bekanntmachung des Hinweises auf die Patenterteilung: **20.03.2024**
(21) Anmeldenummer: 20727617.1
(22) Anmeldetag: 20.05.2020
(51) Int. Cl.: B60T 8/171, F16D 51/24, F16D 65/22, F16D 65/08, F16D 66/00

(54) **TROMMELBREMSE MIT EINER LASTMESSEINRICHTUNG**
DRUM BRAKE WITH A LOAD MEASURING DEVICE
FREIN À TAMBOUR AVEC UN DISPOSITIF DE MESURE DE LA CHARGE

(30) Priorität: 24.05.2019 DE 102019207664
(43) Veröffentlichungstag der Anmeldung: 06.04.2022
(73) Patentinhaber: Continental Automotive Technologies GmbH, 30165 Hannover (DE)
(72) Erfinder: GÄDKE, Martin, 60488 Frankfurt am Main (DE); VON HAYN, Holger, 60488 Frankfurt am Main (DE); SCHULITZ, Matthias, 60488 Frankfurt am Main (DE); SEFO, Ahmed, 60488 Frankfurt am Main (DE); BACH, Uwe, 60488 Frankfurt am Main (DE); MESSNER, Adrian, 60488 Frankfurt am Main (DE); RITTER, Wolfgang, 60488 Frankfurt am Main (DE); HOFFMANN, Jens, 60488 Frankfurt am Main (DE); PETZOLD, Falk, 60488 Frankfurt am Main (DE); KRUSE, Martin, 60488 Frankfurt am Main (DE); VEY, Christian, 60488 Frankfurt am Main (DE); MEYER, Ulrike, 60488 Frankfurt am Main (DE)
(74) Vertreter: Continental Corporation
(86) Internationale Anmeldenummer: PCT/EP2020/064113
(87) Internationale Veröffentlichungsnummer: WO 2020/239586

(56) Entgegenhaltungen:
- EP-A2- 0 523 338
- WO-A1-99/53214
- DE-A1-102017 217 410
- KR-A- 20090 057 640

## Beschreibung

Die Erfindung bezieht sich auf eine Trommelbremse mit einer Bremstrommel und zwei an die Bremstrommel anlegbaren und auf der Bremsbackenseite einer Trägerplatte betätigbar gelagerten Bremsbacken, die jeweils ein Druckende und ein Widerlagerende aufweisen, wobei sich zwischen den Druckenden eine Spreizeinrichtung und zwischen den Widerlagerenden ein Widerlager mit einer Lastmesseinrichtung befindet, die zur Bestimmung der am Widerlager herrschenden Last dient. Aus der WO 99 53 214 A1, der DE 10 2017 217 410 A1 sowie der US 4 615 419 A gehen Trommelbremsen mit Lastmesseinrichtungen in verschiedener Gestaltung hervor.

Eine Trommelbremse ist in der Offenlegungsschrift DE 10 2018 202 261 A1 beschrieben. Das Widerlager ist demnach entweder mit der Trägerplatte oder mittels Schrauben, die die Trägerplatte durchdringen, mit dem hinter der Trägerplatte liegenden Achsschenkel verbunden. Das Widerlager ist elastisch ausgeführt, so dass die Bremskräfte, die von den Bremsbacken auf das Widerlager eingeleitet werden, elastisch nachgiebig abgestützt werden können.

Des Weiteren wird in der genannten Offenlegungsschrift schon vorgeschlagen, die elastische Nachgiebigkeit zu nutzen, um die Bremskräfte (Last) zu ermitteln, die auf das Widerlager bei einer Bremsung wirken. Die Größe dieser Kräfte wird insbesondere zur Steuerung einer elektromotorisch ausgeführten Spreizeinrichtung benötigt. Allerdings offenbart die Offenlegungsschrift keine spezifische Ausführung einer solchen Messeinrichtung.

Die EP 0 523 338 A2 bezieht sich auf ein Verfahren zum Steuern einer Bremsvorrichtung gegen Rückwärtsrollen eines Kraftfahrzeugs beim Anfahren am Berg, bei dem die Bremsvorrichtung jeweils erst dann gelöst wird, wenn das vom Motor/Getriebe aufgebrachte wirksame Antriebsmoment groß genug ist, um das Kraftfahrzeug auch bei gelöster Bremsvorrichtung am Rückwärtsrollen zu hindern. Dabei wird vorgeschlagen, dass an bremskraftabstützenden Teilen des Fahrzeugs, Sensoren zur Erfassung der Richtung der Bremskraftabstützung vorgesehen sind, deren Sensorsignale einer elektronischen Steuer- und Regeleinrichtung zugeführt werden, welche ein Steuersignal zum selbsttätigen Lösen der Bremsvorrichtung erzeugt, sobald sie aus den ihr zugeführten Sensorsignalen eine Richtungsumkehr der Bremskraftabstützung ermittelt hat. Zwecks Umsetzung eigne sich eine Trommelbremse enthaltend Bremsbacken und in Umfangsrichtung der Bremstrommel abstützendem Widerlager wobei die Sensoren innerhalb der Trommelbremse angeordnet sind, und die Sensoren als Kraftmesser ausgebildet und jeweils zwischen dem Widerlager und den sich daran abstützenden Enden der Bremsbacken angeordnet sind. Dabei sind die Sensoren jeweils zwischen dem Widerlager und den sich daran abstützenden Enden der beiden Bremsbacken angeordnet, und mit im Widerlager in Umfangsrichtung verschieblich gelagerte elektrische Schaltstößel, die bei ihrer Verlagerung in die eine Umfangsrichtung einen ersten Schaltzustand und bei ihrer Verlagerung in die andere Umfangsrichtung einen zweiten Schaltzustand einnehmen. Die Widerlagerkonstruktion umfasst einen Zylinder, in dem zwei Kolben geführt sind, an deren Außenstirnseiten die Widerlagerenden der Bremsbacken anliegen.

Die Erfindung beruht damit auf der Aufgabe, für eine an einem Achsschenkel montierbare Trommelbremse eine alternative Messeinrichtung darzustellen, die gerade unter dem Gesichtspunkt, dass die elastische Nachgiebigkeit naturgemäß nur über kleine Wegstrecken erfolgen darf, eine hinreichende gute Messgenauigkeit gewährleistet.

Zur Lösung der Aufgabe sieht die Erfindung vor, dass Innenstirnseiten der Kolben über je eine Feder an einer Stufe im Zylinder abgestützt sind, und dass von der Außenseite des Zylinders ein hohler Zapfen absteht, der eine Öffnung in der Trägerplatte durchdringt, so dass er in einen Aufnahmeraum in einem an der Trägerplatte anliegenden Achsschenkel oder in einem am Achsschenkel befestigten Verstärkungselement aufgenommen werden kann.

Wenn die Öffnung in der Trägerplatte und der Aufnahmeraum passgenau zum Außenquerschnitt des Zapfens ausgeführt sind, ist die Orientierung des Widerlagers als Ganzes zum Achsschenkel exakt definiert, so dass eine hohe Messgenauigkeit erzielt wird.

Um den Zylinder am Achsschenkel bzw. am Verstärkungselement zu befestigen, sieht die Erfindung vor, dass der Zylinder seitliche Augen zur Aufnahme von Schrauben aufweist, wobei die Schrauben die Trägerplatte durchdringen, um mit dem der Trägerplatte anliegenden Achsschenkel bzw. Verstärkungselement verschraubt zu werden. Anstelle einer Schraubverbindung kann auch eine Nietverbindung realisiert werden.

Bei einer Bremsbetätigung werden die Kolben gegen die Kraft der Federn innerhalb des Zylinders verschoben. Dabei können nur kleine Wege realisiert werden, da größere Federwege durch erhöhte Betätigungswege für die Bremsbacken ausgeglichen werden müssten. Die Federn weisen daher eine hohe Federrate auf.

Bei hohen Federraten reichen kleine Verschiebewege der Kolben aus, um aus einem Verschiebeweg mit ausreichender Messgenauigkeit die auf die Kolben wirkenden Kräfte zu bestimmen. Dazu sind die Kolben mit sensierbaren Elementen versehen und im Zapfen sind Sensoren untergebracht, die auf die sensierbaren Elemente reagieren.

Typischerweise bestehen die sensierbaren Elemente aus Magneten und die Sensoren aus magnetfeldempfindlichen Sensoren, wobei es sich z. B. um Hallsensoren oder AMR-Sensoren handelt, die auf dem anisotropen magnetoresistiven Effekt beruhen.

Geeignet sind auch induktive Sensoren, da hierfür keine Magnete als sensierbare Elemente benötigt werden.

Federn mit einer hohen Federkonstante sind z. B. Tellerfedern, wobei mehrere Tellerfedern zu Paketen zusammengestellt werden können. Geeignet sind auch Spiraltellerfedern, da diese wegen einer geringen inneren Reibung eine kleinere Hysterese aufweisen.

Als geeignet haben sich aber auch sogenannte Hülsenfedern erwiesen. Dabei handelt es sich um Hülsen mit auf ihren Umfang verteilten Längsschlitzen, so dass die Hülsen beim Druck auf ihren Stirnseiten sich aufweiten können. Die Rückstellkraft wird erhöht, indem die Hülse nicht aus einer Lage sondern aus mehreren Lagen besteht, die zu einer Spirale aufgewickelt sind. Die Federkonstante kann dabei durch die Zahl der Lagen eingestellt werden.

Für die Anordnung der sensierbaren Elemente gibt es zwei Möglichkeiten: Zum einen können an den Kolben seitlich abstehende Stifte angeordnet sein, die quer zu den Kolben verlaufen und deren äußeren, zum Zapfen weisenden Enden die sensierbaren Elemente, also z. B. Magnete, tragen.

Die Stifte laufen dabei in einem Längsschlitz in einer inneren Stufe im Zylinder, so dass gleichzeitig eine Verdrehsicherung für die Kolben gegeben ist. Die Stifte befinden sich dabei an den inneren Enden der Kolben, so dass sie gegenüber dem Zapfen liegen, wo sich die Sensoren befinden.

Zum anderen können die sensierbaren Elemente aber auch unmittelbar in oder an der Mantelfläche der Kolben angebracht sein.

Die Sensoren sind in einem Sensorgehäuse untergebracht, das passgenau in den hohl ausgeführten Zapfen eingeführt wird, so dass die Sensoren den sensierbaren Elementen gegenüberliegen. Das andere Ende des Sensorgehäuses ist mit einer Steckerleiste versehen. Das Sensorgehäuse bildet dabei gleichzeitig einen Stopfen, der den Zapfen dichtend verschließt.

Es bleibt weiterhin hinzuzufügen, dass der erfindungsgemäßen Trommelbremse vorteilhafterweise ein elektromechanisch betätigbarer Radbremsaktuator zugeordnet ist, welcher zur elektrischen Versorgung, und/oder Steuerung und/oder Regelung mit einer elektronischen Steuereinheit ECU elektrisch verbunden ist, und wobei die Messeinrichtigung zur Steuerung und/oder Regelung des Aktuators mit der elektronischen Steuereinheit verbunden ist, und elektrische Signale und/oder Messwerte bzw. Sensorsignale an die elektronische Steuereinheit abgibt.

Im Folgenden soll anhand von zwei Ausführungsbeispielen die Erfindung näher erläutert werden. Dazu zeigen:
- Fig. 1: eine Seitenansicht eines Teilabschnittes einer Trommelbremse mit einem Widerlager, das aus einem zwei Kolben aufnehmenden Zylinder gebildet ist,
- Fig. 2: eine perspektivische Außenansicht des Widerlagers nach Fig. 1,
- Fig. 3: einen Längsschnitt durch das Widerlager gemäß einer ersten Ausführungsform,
- Fig. 4: einen Querschnitt durch das Widerlager gemäß der ersten Ausführungsform,
- Fig. 5: einen Längsschnitt durch das Widerlager gemäß einer zweiten Ausführungsform und
- Fig. 6: einen Querschnitt durch das Widerlager gemäß der zweiten Ausführungsform.

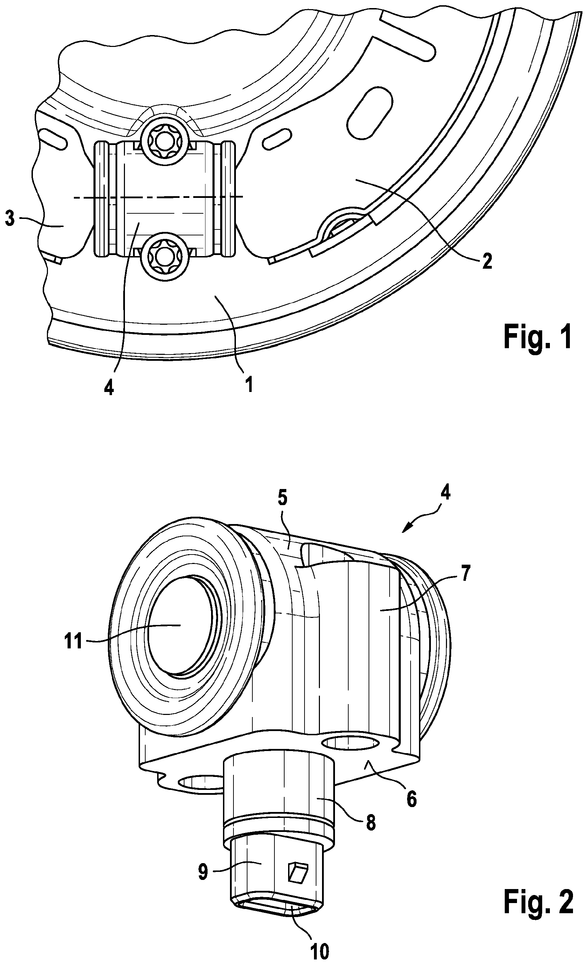

Die Fig. 1 zeigt die Draufsicht auf einen Teilabschnitt einer Trommelbremse. Auf einer Trägerplatte 1 sind zwei Bremsbacken 2, 3 betätigbar gelagert bzw. so fixiert, dass sie mit Ihren hier nicht besonders ausgewiesenen, als Widerlagerenden ausgebildeten, Schnittstellen mit einem Widerlager 4 kooperieren, d.h. auch abgestützt sind. Zwischen den beiden anderen, den Widerlagerenden gegenüber liegend arrangierten, sowie hier auch nicht besonders ausgewiesenen Druckenden der Bremsbacken 2, 3 befindet sich eine betätigbare Spreizeinrichtung, die im Rahmen der Bremsbetätigung die Bremsbacken 2, 3 gegen eine hier nicht näher ausgewiesene (im Fahrzeugfahrbetrieb rotierende) Bremstrommel zu drücken vermag. Es handelt sich somit ganz grundsätzlich, d.h. typischerweise um eine ganz besonders gestaltete Konstruktion von einer Trommelbremse des Typs Simplex, deren Basisfunktion einem Bremsenfachmann in Verbindung mit hydraulischer Betätigung grundsätzlich wohlbekannt ist und daher hier nicht näher beschrieben werden braucht.

Das Widerlager 4, das perspektivisch in der Fig. 2 dargestellt ist, besteht aus einem Zylinder 5, dessen Mantel zum Teil als abgeflachte Auflagefläche 6 ausgebildet ist, mit der er auf die Trägerplatte 1 aufgesetzt wird. Senkrecht zu der Auflagefläche 6 befinden sich zwei erhabene Augen 7 zur Durchführung von Schrauben. Von der Auflagefläche 6 steht weiterhin ein Zapfen 8 ab, der hohl ausgeführt ist und der der Aufnahme eines Sensorgehäuses 9 dient, dessen aus dem Zapfen 8 hervorstehender Teil als Steckerleiste 10 ausgebildet ist.

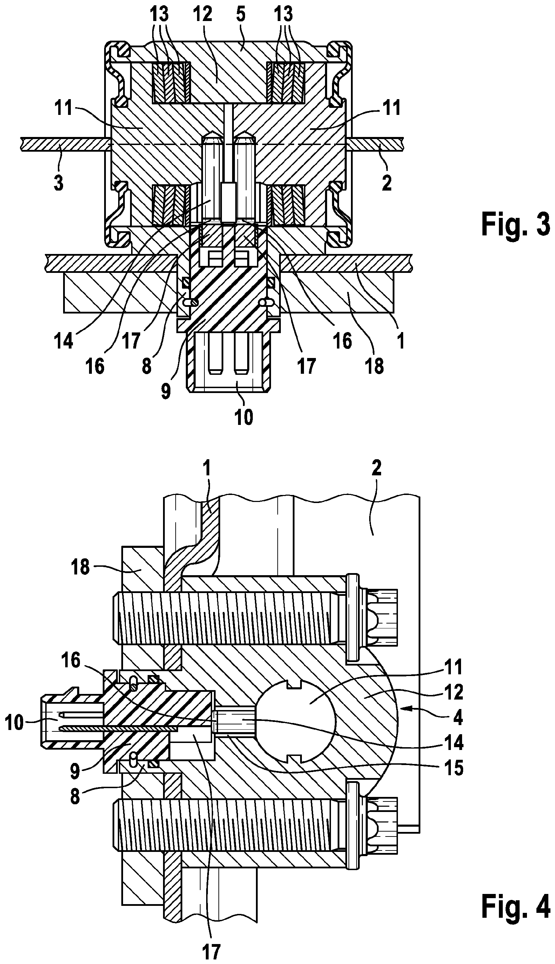

Die Fig. 3 zeigt eine erste Ausführungsform des Widerlagers 4 in einem Längsschnitt. In dem Zylinder 5 sind gegenüberliegend zwei gestufte Kolben 11 geführt, wobei jeweils der Bereich des größeren Durchmessers nach außen und der Bereich kleineren Querschnitts nach innen in den Zylinder 5 weist. Die Widerlagerenden der Bremsbacken 2, 3 liegen dabei an den nach außen weisenden Stirnseiten der Kolben 11 an. Manschetten dichten die Kolben 11 gegenüber dem Zylinder 5 ab.

Die innenliegenden Bereiche der Kolben 11 sind in einer ringförmigen Stufe 12 im Zentrum des Zylinders 5 geführt. Auf dem Bereich des kleineren Querschnittes sind jeweils mehrere Tellerfedern 13, die ein Tellerfederpaket bilden, aufgesteckt, die sich somit zwischen dem Bereich des größeren Durchmessers und der Stufe 12 befinden. Der von den Bremsbacken 2, 3 ausgeübte Druck auf die Stirnseiten der Kolben 11 bewirkt ein Zusammendrücken der Tellerfedern 13 und damit einen leichten Versatz der Kolben 11 in Richtung der Achse des Zylinders 5.

Wie der Fig. 4 näher entnommen werden kann, stehen von den inneren Enden der Kolben 11 jeweils Stifte 14 senkrecht ab, die in einem Längsschlitz 15 in der Stufe 12 geführt sind und somit eine Verdrehsicherung für die Kolben 11 darstellen. Ihre von den Kolben 11 wegweisenden Enden befinden sich vor den Zapfen 8 und sind mit Magneten 16 versehen. Ihnen gegenüber liegen Sensoren 17, die auf einer Platine in dem Sensorgehäuse 9 befestigt sind und eine elektrische Verbindung zur Steckerleiste 10 am anderen Ende des Sensorgehäuses 9 haben.

Auf die Stifte 14 kann ggf. verzichtet werden. In diesem Fall sind die Magnete 16 unmittelbar am Kolben 11 befestigt und das Sensorgehäuse 9 verlängert, so dass sein Ende mit den Sensoren an den Kolben 11 heranreicht.

Wie der Fig. 4 ebenfalls zu entnehmen ist, wird die Trägerplatte 1 zwischen der Auflagefläche 6 am Widerlager 4 und einem Achsschenkel 18 bzw. einem separaten Verstärkungselement eingeklemmt. Das Sensorgehäuse 9 ist dicht in den Zapfen 8 eingesetzt und ist mit einer Codierung versehen, die einen lagegenauen Einsatz ermöglicht, so dass die Sensoren 17 den Magneten 16 an den Stiften 14 gegenüberliegen.

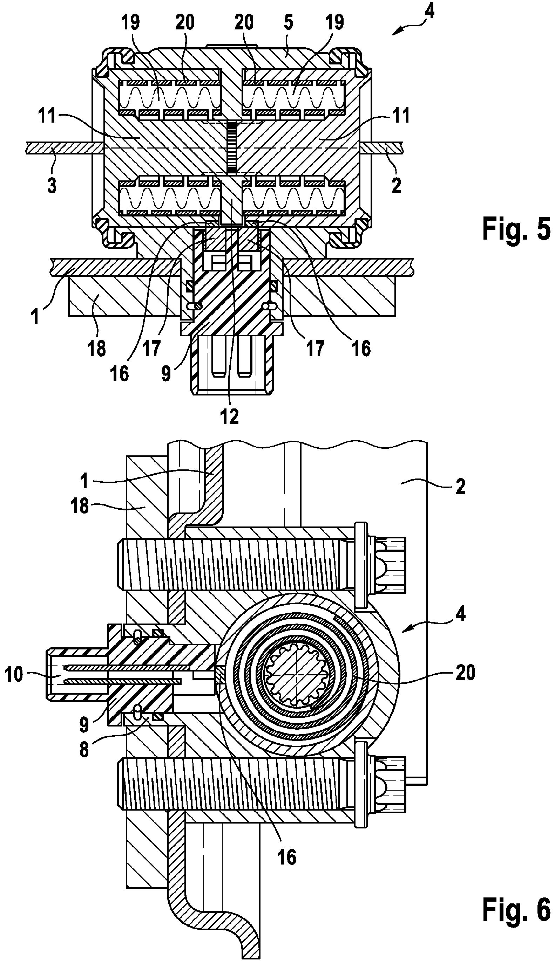

Eine zweite Ausführung des Widerlagers 4 ist in den Fig. 5 und 6 dargestellt. Die Kolben 11, die in dieser Ausführungsform einen gleichbleibenden Querschnitt haben, besitzen aber einen koaxialen ringförmigen Ringraum 19, in dem Hülsenfedern 20 koaxial eingesetzt sind. Diese bestehen aus einem mit quer verlaufenden Schlitzen versehenen Blechstreifen, der spriralförmig zu einer mehrlagigen Hülse aufgewickelt ist, wobei sich die Schlitze dann in Längsrichtung der Hülse erstrecken. Die Schlitze erlauben eine elastisch nachgiebige Weitung der Hülse, wenn Kräfte auf ihre Stirnseiten ausgeübt werden.

Die Stufe 12 ist bei dieser Ausführung schmal ausgeführt, so dass die inneren Enden der Kolben 11 bis vor den Zapfen 8 reichen. Daher können die Magnete 16 dort unmittelbar in bzw. an der Mantelfläche der Kolben 11 angebracht werden, so dass auf Stifte 14 - wie in der ersten Ausführung - verzichtet werden kann.

Zur verdrehgesicherten Lage der Kolben 11 im Zylinder 5 können an deren Enden Schlitze oder Stege vorgesehen werden, die mit entsprechenden Gegenschlitzen oder Gegenstegen an der inneren Mantelfläche des Zylinders 5 eingreifen.

Auch bei dieser Ausführung wird der Zapfen 8 - wie die Fig. 6 zeigt - durch eine Öffnung in der Trägerplatte 1 in einem Aufnahmeraum im Achsschenkel 18 passgenau geführt und mit Schrauben, die durch die Augen 7 hindurchgeführt sind, mit dem Achsschenkel 18 verschraubt.

### Bezugszeichenliste

- 1: Trägerplatte
- 2: Bremsbacken
- 3: Bremsbacken
- 4: Widerlager
- 5: Zylinder
- 6: Auflagefläche
- 7: Augen
- 8: Zapfen
- 9: Sensorgehäuse
- 10: Steckerleiste
- 11: Kolben
- 12: Stufe
- 13: Tellerfeder
- 14: Stifte
- 15: Längsschlitz
- 16: Magnete
- 17: Sensoren
- 18: Achsschenkel
- 19: Ringraum
- 20: Hülsenfedern

ECU elektronische (Brems)Steuereinheit

## Patentansprüche

1. Trommelbremse mit einer Bremstrommel und zwei an die Bremstrommel anlegbare, auf der Bremsbackenseite einer Trägerplatte (1) befestigten Bremsbacken (2, 3), die jeweils ein Druckende und ein Widerlagerende aufweisen, wobei sich zwischen den Druckenden eine Spreizeinrichtung und zwischen den Widerlagerenden ein Widerlager (4) mit einer Lastmesseinrichtung befindet, die zur Bestimmung der am Widerlager (4) herrschenden Last dient, das Widerlager (4) einen Zylinder (5) aufweist, in dem zwei Kolben (11) geführt sind, an deren Außenstirnseiten die Widerlagerenden der Bremsbacken (2, 3) anliegen **dadurch gekennzeichnet, dass** Innenstirnseiten der Kolben (11) über je eine Feder an einer Stufe (12) im Zylinder (5) abgestützt sind, und dass von der Außenseite des Zylinders (5) ein hohler Zapfen (8) absteht, der eine Öffnung in der Trägerplatte (1) durchdringt, so dass er in einen Aufnahmeraum in einem an der Trägerplatte (1) anliegenden Achsschenkel (18) oder in einem am Achsschenkel (18) befestigten Verstärkungselement aufnehmbar ist.

2. Trommelbremse nach Anspruch 1, **dadurch gekennzeichnet, dass** der Zylinder (5) seitliche Augen (7) zur Aufnahme von Schrauben oder Nieten aufweist, wobei die Schrauben oder Nieten die Trägerplatte (1) durchdringen, um mit einem an der Trägerplatte (1) anliegenden Achsschenkel (18) verschraubt oder vernietet zu werden.

3. Trommelbremse nach Anspruch 1, **dadurch gekennzeichnet, dass** die Kolben (11) mit sensierbaren Elementen versehen sind, und dass in dem Zapfen (8) Sensoren (17) untergebracht sind, die auf die sensierbaren Elemente reagieren.

4. Trommelbremse nach Anspruch einem oder mehreren der Ansprüche 1, 2 und/oder 3, **dadurch gekennzeichnet, dass** die Federn Tellerfedern (13) oder Spiraltellerfedern sind.

5. Trommelbremse nach einem oder mehreren der Ansprüche 1, 2 und/oder 3, **dadurch gekennzeichnet, dass** die Federn Hülsenfedern (20) sind.

6. Trommelbremse nach Anspruch 3, **dadurch gekennzeichnet, dass** von den Kolben (11) seitlich Stifte (14) abstehen, deren Enden zum Zapfen (8) weisen und die die sensierbaren Elemente tragen.

7. Trommelbremse nach Anspruch 6, **dadurch gekennzeichnet, dass** die Stifte (14) in einem Längsschlitz (15) in einer inneren Stufe (12) im Zylinder (5) laufen.

8. Trommelbremse nach Anspruch 3, **dadurch gekennzeichnet, dass** die sensierbaren Elemente in oder an der Mantelfläche der Kolben (11) angebracht sind.

9. Trommelbremse nach einem oder mehreren der Ansprüche 3, 6, 8, **dadurch gekennzeichnet, dass** die Sensoren (17) in einem Sensorgehäuse (9) untergebracht sind, das passgenau in den hohl ausgeführten Zapfen eingeführt ist, so dass die Sensoren (17) den sensierbaren Elementen gegenüberliegen.

10. Trommelbremse nach einem oder mehreren der Ansprüche 8 und/oder 9, **dadurch gekennzeichnet, dass** die Sensoren (17) AMR-Sensoren sind, welche auf anisotropem magnetoresistivem Effekt beruhen, und dass die sensierbaren Elemente Magnete sind.

## Claims

1. Drum brake having a brake drum and two brake shoes (2, 3), which can be applied to the brake drum, are secured on the brake shoe side of a carrier plate (1) and each have a pressure end and an abutment end, wherein a spreader device is situated between the pressure ends, and an abutment (4) having a load measurement device that is used to determine the load prevailing at the abutment (4) is situated between the abutment ends, the abutment (4) has a cylinder (5) in which two pistons (11) are guided, on the outer end faces of which the abutment ends of the brake shoes (2, 3) rest, **characterized in that** the inner end faces of the pistons (11) are each supported by a spring on a step (12) in the cylinder (5), and **in that** a hollow peg (8) projects from the outside of the cylinder (5), which peg penetrates an opening in the carrier plate (1), such that it can be received in a receiving space in a steering knuckle (18) resting against the carrier plate (1) or in a reinforcement element fixed on the steering knuckle (18).

2. Drum brake according to Claim 1, **characterized in that** the cylinder (5) has lateral lugs (7) for receiving screws or rivets, wherein the screws or rivets penetrate the carrier plate (1) in order to be screwed or riveted to a steering knuckle (18) resting against the carrier plate (1).

3. Drum brake according to Claim 1, **characterized in that** the pistons (11) are provided with elements that can be sensed, and **in that** sensors (17) which respond to the elements that can be sensed are accommodated in the peg (8).

4. Drum brake according to one or more of Claims 1, 2 and/or 3, **characterized in that** the springs are disk springs (13) or spiral disk springs.

5. Drum brake according to one or more of Claims 1, 2 and/or 3, **characterized in that** the springs are sleeve springs (20).

6. Drum brake according to Claim 3, **characterized in that** pins (14) project laterally from the pistons (11), the ends of which pins point toward the peg (8) and which pins carry the elements that can be sensed.

7. Drum brake according to Claim 6, **characterized in that** the pins (14) run in a longitudinal slot (15) in an inner step (12) in the cylinder (5).

8. Drum brake according to Claim 3, **characterized in that** the elements that can be sensed are mounted in or on the lateral surface of the pistons (11).

9. Drum brake according to one or more of Claims 3, 6 and 8, **characterized in that** the sensors (17) are accommodated in a sensor housing (9), which is inserted with an accurate fit into the hollow peg, thus ensuring that the sensors (17) are opposite the elements that can be sensed.

10. Drum brake according to one or more of Claims 8 and/or 9, **characterized in that** the sensors (17) are AMR sensors, which are based on anisotropic magnetoresistive effect, and **in that** the elements that can be sensed are magnets.

## Revendications

1. Frein à tambour avec un tambour de frein et deux mâchoires de frein (2, 3) aptes à être appliquées contre le tambour de frein, fixées sur le côté mâchoire de frein d'une plaque de support (1), dont chacune présente une extrémité de pression et une extrémité de butée, un dispositif d'écartement se trouvant entre les extrémités de pression et une butée (4) avec un dispositif de mesure de charge se trouvant entre les extrémités de butée, ce dispositif servant à déterminer la charge s'exerçant sur la butée (4), la butée (4) présentant un cylindre (5) dans lequel sont guidés deux pistons (11), sur les faces frontales extérieures desquels reposent les extrémités de butée des mâchoires de frein (2, 3), **caractérisé en ce que** les faces frontales intérieures des pistons (11) s'appuient chacune sur un gradin (12) présent dans le cylindre (5) par l'intermédiaire d'un ressort, et **en ce qu'**un tenon creux (8) fait saillie de la face extérieure du cylindre (5), et traverse une ouverture dans la plaque de support (1), de sorte qu'il est apte à être reçu dans un espace de réception dans une fusée d'essieu (18) adjacente à la plaque de support (1) ou dans un élément de renforcement fixé à la fusée d'essieu (18).

2. Frein à tambour selon la revendication 1, **caractérisé en ce que** le cylindre (5) présente des oeillets latéraux (7) destinés à recevoir des vis ou des rivets, les vis ou les rivets traversant la plaque de support (1) pour être vissés ou rivetés à une fusée d'essieu (18) appliquée contre la plaque de support (1).

3. Frein à tambour selon la revendication 1, **caractérisé en ce que** les pistons (11) sont pourvus d'éléments détectables et **en ce que** des capteurs (17) réagissant aux éléments détectables sont logés dans le tenon (8).

4. Frein à tambour selon une ou plusieurs des revendications 1, 2 et/ou 3, **caractérisé en ce que** les ressorts sont des rondelles-ressorts (13) ou des rondelles-ressorts spiralées.

5. Frein à tambour selon une ou plusieurs des revendications 1, 2 et/ou 3, **caractérisé en ce que** les ressorts sont des ressorts à manchon (20).

6. Frein à tambour selon la revendication 3, **caractérisé en ce que** des tiges (14) font saillie latéralement des pistons (11), dont les extrémités sont dirigées vers le tenon (8) et qui portent les éléments détectables.

7. Frein à tambour selon la revendication 6, **caractérisé en ce que** les tiges (14) passent dans une fente longitudinale (15) dans un gradin intérieur (12) présent dans le cylindre (5).

8. Frein à tambour selon la revendication 3, **caractérisé en ce que** les éléments détectables sont montés dans ou sur la surface latérale des pistons (11).

9. Frein à tambour selon une ou plusieurs des revendications 3, 6, 8, **caractérisé en ce que** les capteurs (17) sont logés dans un boîtier de capteur (9) qui est introduit avec un ajustement précis dans le tenon creux, de sorte que les capteurs (17) se trouvent en face des éléments détectables.

10. Frein à tambour selon une ou plusieurs des revendications 8 et/ou 9, **caractérisé en ce que** les capteurs (17) sont des capteurs AMR basés sur un effet magnétorésistif anisotrope et **en ce que** les éléments détectables sont des aimants.
